# EUROPÄISCHE PATENTSCHRIFT

(11) **EP 0 590 162 B1**
(45) Veröffentlichungstag und Bekanntmachung des Hinweises auf die Patenterteilung: **03.01.1996**
(21) Anmeldenummer: 92116125.3
(22) Anmeldetag: 21.09.1992
(51) Int. Cl.: G01D 5/38

(54) **Längen- oder Winkelmesseinrichtung**
Linear or angular measuring device
Capteur linéaire ou angulaire

(43) Veröffentlichungstag der Anmeldung: 06.04.1994
(73) Patentinhaber: Dr. Johannes Heidenhain GmbH, D-83292 Traunreut (DE)
(72) Erfinder: Allgäuer, Michael, Dipl.-Phys., W-8221 Stein/Traun (DE)

(56) Entgegenhaltungen:
- GB-A- 2 095 399

## Beschreibung

Die Erfindung bezieht sich auf eine Längen- oder Winkelmeßeinrichtung gemäß dem Oberbegriff des Anspruches 1.

Die Erfindung geht von dem aus der europäischen Patentschrift EP-0 163 362-B1 bekannten Stand der Technik aus. Dieser Stand der Technik zeigt ein Dreigitterinterferometer, welches in praktischen Anwendungen dadurch, daß eines der Gitter reflektierend gemacht wird, auf zwei Gitterstrukturen reduziert wird. Die Auswertung der interferierenden Teilstrahlen ermöglicht das Feststellen der Größe und der Richtung der Relativverschiebung zwischen den beiden Gittern.

Eine Phasenverschiebung zwischen den von den Detektoren detektierten Beugungsordnungen ist deshalb erforderlich.

In der GB-A-2 095 399 ist ebenfalls eine interferometrisch arbeitende Dreigitter-Meßeinrichtung beschrieben. Das dort angegebene Verhältnis der Gitterkonstanten (2:1:2) der drei Gitter zueinander ermöglicht unter Berücksichtigung der dort angeführten Bemessungsangaben nur eine begrenzte Auflösung.

Die DE-23 16 248-A1 offenbart eine Vorrichtung zum Messen von Verschiebungen mit einem durchlässigen und einem reflektierenden Gitter. Drei Detektoren detektieren die Beugungsgruppen der nullten und der positiven und negativen zweiten Ordnung. Eine klare Offenbarung der Phasenbeziehungen zwischen den von den Detektoren, die nicht die Beugungsgruppen der ersten Ordnung detektieren, detektierten Lichtstrahlen fehlt.

Der vorliegenden Erfindung liegt die Aufgabe zugrunde, eine Meßeinrichtung mit einer sehr hohen Auflösung und großzügiger Ausrichttoleranz unter Verwendung von feinen Gittern mit einer Teilungsperiode in einer Größenordnung von einem halben Mikrometer am Maßstabgitter anzugeben. Die Interferenzstreifen werden mit Fotodetektoren ausgewertet. Ein hoher Modulationsgrad, ein geringer Oberwellenanteil und ein einfacher und kleiner Aufbau sind ebenso erwünscht.

Diese Aufgabe wird von einer Längen- oder Winkelmeßeinrichtung mit den Merkmalen des Anspruches 1 gelöst.

Die besonderen Vorteile bestehen darin, daß mit sehr feinen Teilungsperioden beim Maßstabgitter gearbeitet werden kann, so daß bereits vor einer späteren Signalinterpolation eine hohe Auflösung erzielt wird.

Die Erfindung wird nun anhand eines Beispiels und seiner Varianten unter Bezug auf die beiliegenden Zeichnungen beschrieben.

Dabei zeigt:
- Figur 1: ein optisches Schaubild einer erfindungsgemäßen Vorrichtung zum Messen von Verschiebungen;
- Figur 2: ein schematisches optisches Schaubild;
- Figur 3: ein schematisches optisches Schaubild einer Meßeinrichtung für zwei Dimensionen;
- Figur 4: zwei Blenden- Ausführungsformen und
- Figur 5: ein optisches Teil-Schaubild mit Blende.

### Einzelbeschreibung der Zeichnungen

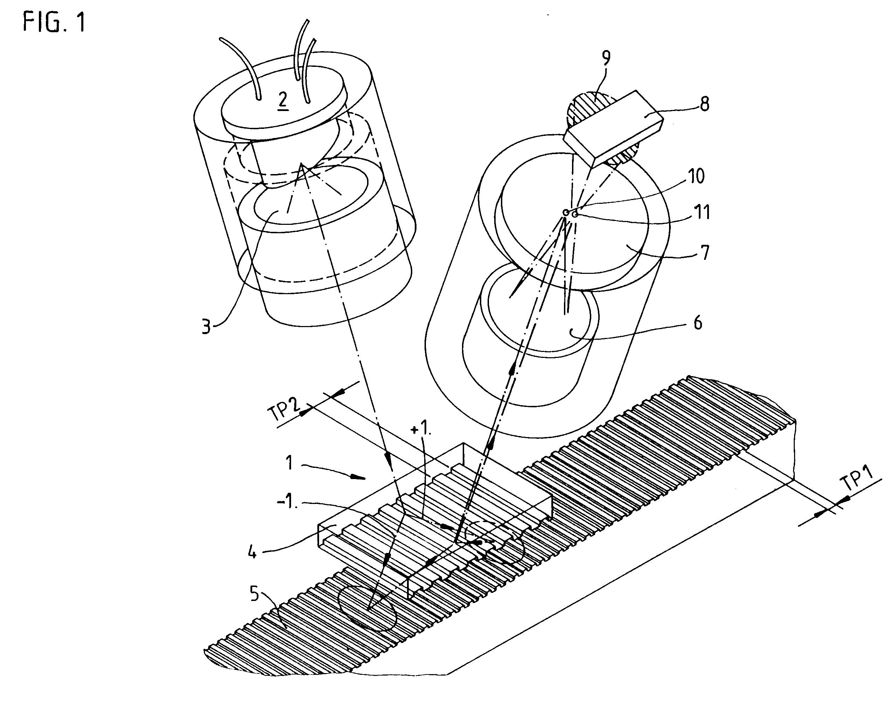

Gemäß der Darstellung in Figur 1 enthält eine Längenmeßeinrichtung 1 eine Lichtquelle 2, einen Kollimator 3, ein Abtastgitter 4, ein reflektierendes Maßstabgitter 5, eine Fokussierlinse 6, eine Ringblende 7 und einen Fotodetektor 8, der ein Interferenzstreifen-System 9 detektiert. In einer praktischen Ausführungsform würden die Bauteile 2, 3, 4, 6, 7 und 8 an einem gegenüber dem reflektierenden Maßstabgitter 5 verschiebbaren Lesekopf angebracht sein. Die elektrischen Ausgangssignale des Fotodetektors 8 bilden ein Maß für die Richtung und Größe der Verschiebung des Lesekopfes gegenüber dem ortsfesten Maßstabgitter 5. Eine Linear- oder Winkelverschiebung zwischen den Elementen 4 und 5 kann bei entsprechendem Aufbau gemessen werden.

Die Besonderheit der gezeigten Längenmeßeinrichtung liegt darin, daß eine punktförmige Lichtquelle 2, nämlich eine Laserdiode, die Licht mit einer Wellenlänge von z.B. 780nm aussendet, verwendet wird.

Das Abtastgitter 4 weist eine Teilungsperiode TP2 auf, die näherungsweise doppelt so groß ist wie die Teilungsperiode TP1 des Maßstabgitters 5. Wichtig ist dabei, daß das Verhältnis nicht genau 2:1, sondern nur näherungsweise 2:1 ist. Das gezeigte Maßstabgitter 5 soll eine Teilungsperiode TP1 von 0,5µm haben, das zugehörige Abtastgitter 4 jedoch eine Teilungsperiode TP2 von 0,9982µm. Allerdings könnte diese Teilungsperiode auch 1,0018µm groß bzw. fein sein.

Das Maßstabgitter 5 und das Abtastgitter 4 sind parallel zueinander angeordnet. Der Lichtstrahl der Laserdiode 2 wird am Abtastgitter 4 in zwei erste Beugungsordnungen -1. und +1. aufgespalten.

Bedingt durch die ungefähr halbe Teilungsperiode TP1 des Maßstabgitters 5, das als Reflexionsmaßstab ausgebildet ist, entsteht jeweils ein gebeugter Teilstrahl, der - in Strichrichtung betrachtetnahezu in sich selbst zurückläuft. In Figur 1 bedeutet das, daß die beiden reflektierten Teilstrahlenbündel der -1. und +1.Ordnung nahezu den gleichen Winkel zur Normalen auf das Maßstabgitter 5 einschließen, wie die einfallenden Teilstrahlenbündel dieser -1. und +1.Ordnung.

Nach der nochmaligen Beugung am Abtastgitter 4 weisen die durchtretenden Teilstrahlenbündel fast parallele Richtungen auf.

Der durch die geringfügige Abweichung des Verhältnisses der Teilungsperioden TP1/TP2 von einem ganzzahligen Verhältnis entstehende kleine Winkel zwischen den gebeugten Teilstrahlenbündeln führt dazu, daß in der Brennebene der Fokussierlinse 6 zwei Foki 10 und 11 entstehen.

Die von den Foki 10 und 11 ausgehenden Kugelwellen erzeugen ein Interferenzstreifen-System 9, welches mit dem Detektor 8 ausgewertet wird. Die Ringblende 7 blendet dabei andere Beugungsordnungen und Streulicht aus.

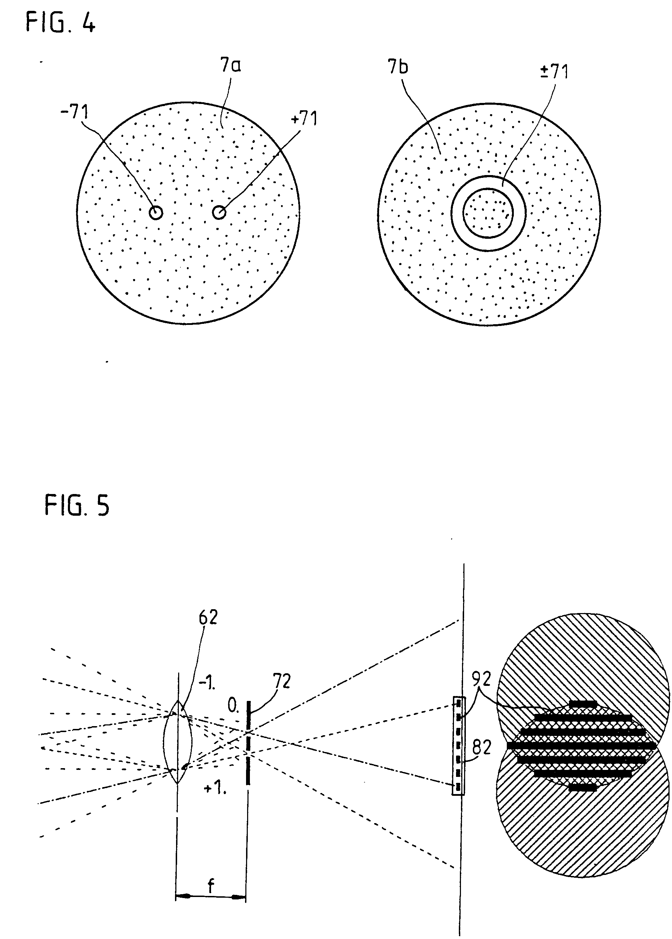

Derartige Blenden 7 sind in der Figur 4 gezeigt, auf die noch näher eingegangen wird.

Abweichend von der in Figur 1 gezeigten Anordnung, bei der die Lichtquelle 2 und der Detektor 8 in einer Ebene senkrecht zur Meßrichtung angeordnet sind, kann auch eine andere Anordnung erfolgen.

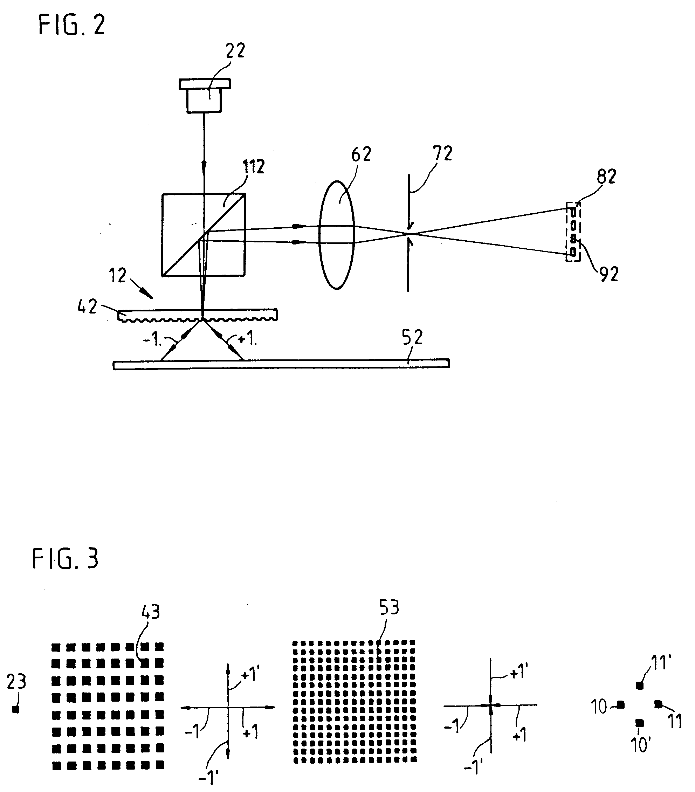

Gemäß Figur 2 sind die Laserdiode 22 und der Detektor 82 zwar auch in einer Ebene angeordnet, diese wird jedoch von einer Komponente in Meßrichtung und der Normalen auf das Maßstabgitter 5 aufgespannt.

Ein Strahlteiler 112 befindet sich im Strahlengang zwischen Laserdiode 22 und Detektor 82. Bei diesem Ausführungsbeispiel ist gut zu erkennen, daß die gebeugten Teilstrahlenbündel -1. und +1. nach der Reflexion am Maβstabgitter 52 in sich selbst zurücklaufen und nach erneuter Beugung am Abtastgitter 42 mit geringer Scherung auf den Strahlteiler 112 treffen. Der Strahlteiler 112 lenkt die unparallel verlaufenden Teilstrahlenbündel -1. und +1. auf eine Linse 62, von der sie fokussiert und auf eine Blende 72 geworfen werden. Nachdem die zur Auswertung zulässigen Teilstrahlenbündel die Blende 72 durchlaufen haben, fallen sie auf einen Detektor 82, der sie-analog zur beschreibung von Figur 1 ein Interferenzstreifen-System 92 bildend-detektiert.

In Figur 3 ist sehr schematisiert gezeigt, daß bei entsprechendem Aufbau mit Hilfe von Kreuzgittern eine Längenmeßeinrichtung für zwei Dimensionen geschaffen werden kann.

Kern einer derartigen Meßeinrichtung sind sogenannte Kreuzgitter. Sowohl das Abtastgitter 43 als auch das Maßstabgitter 53 weisen eine Gitterteilung in zwei Koordinatenrichtungen auf. Daraus resultiert ein Kreuzgitter. Für diese Gitter gelten ebenfalls die erfindungsgemäßen Kriterien, weshalb zur Vermeidung von Wiederholungen auf das Vorstehende hingewiesen wird.

Der Punkt 23 symbolisiert einen von einer nicht dargestellten Lichtquelle ausgesendeten Lichtstrahl, der in dieser aufgefalteten Darstellung auf das als Kreuzgitter ausgebildetes Abtastgitter 43 trifft. Am Kreuzgitter 43 wird der Lichtstrahl 23 in zueinander senkrecht verlaufende Teilstrahlenbündel -1. und +1. sowie -1.' und +1.' aufgespalten und gebeugt. Diese gebeugten Teilstrahlenbündel -1., +1., -1.', +1.' werden am Maßstabgitter 53, welches ebenfalls als Kreuzgitter ausgebildet ist, reflektiert und abermals gebeugt. Die nochmals gebeugten Teilstrahlenbündel -1., +1., -1.', +1.' sind nach dem Maßstab-Kreuzgitter 53 symbolisch dargestellt. In Analogie zum ersten und zweiten Ausführungsbeispiel in den Figuren 1 und 2 treten aufgrund der erfindungsgemäßen Bedingungen in der Brennebene einer ebenfalls nicht dargestellten Linse vier Foki auf, die als Punkte 10, 11 und 10', 11' schematisch dargestellt sind.

Die bereits in der Beschreibung von Figur 1 erwähnte Ringblende ist in zwei Ausführungsformen in Figur 4 dargestellt. Die Blende 7a weist zwei lichtdurchlässige Bereiche -71 und +71 auf, durch die die leicht unparallel verlaufenden Teilstrahlenbündel hindurchtreten können.

Eine Alternative stellt die Ausführungsform gemäß 7b dar. Hier ist der lichtdurchlässige Bereich ±71 tatsächlich ringförmig, was die Justage erleichtert.

Schließlich ist in Figur 5 noch das optische Schema gemäß dem rechten Teil der Figur 2 gezeigt. Es wird deutlich, daß mit Hilfe der Blende 72 alle Beugungsordnungen außer der -1. und +1. herausgefiltert werden. Mit dem Symbol f ist angedeutet, daß sich die Blende 72 in der Brennebene der Linse 62 befindet.

## Patentansprüche

1. Interferentiell arbeitende Längen- oder Winkelmeßeinrichtung mit mehreren relativ zueinander verschiebbaren Gittern, die als Abtast- und als Maßstabgitter ausgebildet sind und die von einer Lichtquelle, bevorzugt einer Laserdiode, kommendes Licht beugen und ferner die gebeugten Teilstrahlenbündel zur Interferenz bringen, wobei die durch Interferenz entstehenden Intensitätsmodulationen der Teilstrahlenbündel durch wenigstens einen Detektor in zueinander phasenverschobene elektrische Signale umgewandelt werden, dadurch gekennzeichnet, daß das Maßstabgitter (5) eine Teilungsperiode (TP1) aufweist, die kleiner ist als die Wellenlänge (λ) des Lichtes, und daß das Abtastgitter (4)eine Teilungsperiode (TP2) aufweist, die näherungsweise, aber nicht genau doppelt so groß ist wie die Teilungsperiode (TP1) des Maßstabgitters (5), und die größer als die Wellenlänge (λ) des Lichtes ist.

2. Längen- oder Winkelmeßeinrichtung nach Anspruch 1, dadurch gekennzeichnet, daß dem letzten durchlaufenen Gitter (4) eine Linse (6) nachgeordnet ist, in deren Brennebene mehrere Foki (10, 11) auftreten.

3. Längen- oder Winkelmeßeinrichtung nach Anspruch 2, dadurch gekennzeichnet, daß die Linse (6) eine Gradientenindex-Linse ist.

4. Längen- oder Winkelmeßeinrichtung nach Anspruch 2, dadurch gekennzeichnet, daß durch die von den Foki (10, 11) ausgehenden Kugelwellen ein Interferenzstreifen-System (9) erzeugbar ist.

5. Längen- oder Winkelmeßeinrichtung nach Anspruch 4, dadurch gekennzeichnet, daß zwischen der Linse (6) und den Interferenzstreifen (9) eine Blende (7) angeordnet ist.

6. Längen- oder Winkelmeßeinrichtung nach Anspruch 4, dadurch gekennzeichnet, daß zur Auswertung des Interferenzstreifen-Systemes (9) der Linse (6) ein strukturierter Detektor (8) nachgeordnet ist.

7. Längen- oder Winkelmeßeinrichtung nach Anspruch 1, dadurch gekennzeichnet, daß die Lichtquelle (2) und der Detektor (8) in einer Ebene senkrecht zur Meßrichtung angeordnet sind.

8. Längen- oder Winkelmeßeinrichtung nach Anspruch 7, dadurch gekennzeichnet, daß die Lichtquelle (2) und der Detektor (8) symmetrisch zur Normalen auf den Maßstab (5) angeordnet sind.

9. Längen- oder Winkelmeßeinrichtung nach Anspruch 1, dadurch gekennzeichnet, daß die Lichtquelle (2) und der Detektor (8) in einer Ebene angeordnet sind, die von einer Komponente in Meßrichtung, und der Normalen auf das Maßstabgitter (5) aufgespannt wird.

10. Längen- oder Winkelmeßeinrichtung nach Anspruch 9, dadurch gekennzeichnet, daß sich im Strahlengang zwischen Lichtquelle(2) und Detektor (8) ein Strahlteiler (112) befindet.

11. Längen- oder Winkelmeßeinrichtung nach Anspruch 2, dadurch gekennzeichnet, daß an dem Ort der jeweiligen Foki (10, 11) wenigstens je ein Wellenleiter angebracht ist, der die Teilstrahlenbündel einem aus der integrierten Optik an sich bekannten 2x3-Koppler zuführt.

12. Längen- oder Winkelmeßeinrichtung nach irgendeinem der vorhergehenden Ansprüche, dadurch gekennzeichnet, daß als Maßstab- und/oder Abtastgitter Phasen- und/oder Amplitudengitter verwendet werden.

13. Längen- oder Winkelmeßeinrichtung nach irgendeinem der vorhergehenden Ansprüche, dadurch gekennzeichnet, daß als Maßstab- und Abtastgitter sogenannte Kreuzgitter (43, 53) verwendet werden.

14. Längen- oder Winkelmeßeinrichtung nach Anspruch 13, dadurch gekennzeichnet, daß mit Hilfe der Kreuzgitter (43, 53) eine Meßeinrichtung für zwei Dimensionen gebildet wird.

## Claims

1. Interference length or angle measuring device with several gratings displaceable relative to one another, which are constructed as scanning gratings and as scale gratings and which diffract light coming from a light source, preferably a laser diode, and moreover bring the diffracted bundle of component beams to interference, in which case the intensity modulations of the bundles of component beams occurring as a result of interference are converted by at least one detector into electrical signals that are phase-shifted relative to one another, characterised in that the scale grating (5) has a graduation cycle (TP1) which is smaller than the wavelength (λ) of the light; and that the scanning grating (4) has a graduation cycle (TP2) which is approximately, but not exactly, double the size of the graduation cycle (TP1) of the scale grating (5) and which is larger than the wavelength (λ) of the light.

2. Length or angle measuring device according to Claim 1, characterised in that a lens (6), in the focal plane of which several foci (10, 11) occur, is arranged downline of the last grating (4) passed through.

3. Length or angle measuring device according to Claim 2, characterised in that the lens (6) is a gradient index lens.

4. Length or angle measuring device according to Claim 2, characterised in that an interference fringe system (9) may be generated by the spherical waves emanating from the foci (10, 11).

5. Length or angle measuring device according to Claim 4, characterised in that a diaphragm (7) is arranged between the lens (6) and the interference fringes (9).

6. Length or angle measuring device according to Claim 4, characterised in that a structured detector (8) is arranged downline of the lens (6) for evaluation of the interference fringe system (9).

7. Length or angle measuring device according to Claim 1, characterised in that the light source (2) and the detector (8) are arranged in a plane perpendicular to the direction of measurement.

8. Length or angle measuring device according to Claim 7, characterised in that the light source (2) and the detector (8) are arranged symmetrically to the normal onto the scale (5).

9. Length or angle measuring device according to Claim 1, characterised in that the light source (2) and the detector (8) are arranged in a plane which is spanned by a component in the direction of measurement and by the normal onto the scale grating (5).

10. Length or angle measuring device according to Claim 9, characterised in that a beam splitter (112) is located in the optical path between the light source (2) and the detector (8).

11. Length or angle measuring device according to Claim 2, characterised in that at the location of the respective foci (10, 11), at least one respective waveguide is attached which feeds the bundle of component beams to a 2x3-coupler known per se from integrated optics.

12. Length or angle measuring device according to any one of the preceding claims, characterised in that phase and/or amplitude gratings are used as scale and/or scanning gratings.

13. Length or angle measuring device according to any one of the preceding claims, characterised in that socalled cross gratings (43, 53) are used as scale and/or scanning gratings.

14. Length or angle measuring device according to Claim 13, characterised in that a measuring system for two dimensions is formed by means of the cross grating (43, 53).

## Revendications

1. Dispositif de mesure de longueur ou d'angle par interférence comportant plusieurs réseaux mobiles l'un par rapport à l'autre, lesquels réseaux sont agencés en réseau de balayage et en réseau de mesure, diffractent la lumière provenant d'une source lumineuse, de préférence d'une diode laser, et amènent en interférence les faisceaux de rayons partiels diffractés, les modulations en intensité des faisceaux partiels obtenues par interférence étant transformées par au moins un détecteur en signaux électriques mutuellement déphasés, caractérisé par le fait que le réseau de mesure (5) présente une période de division (TP1) qui est inférieure à la longueur d'onde (λ) de la lumière et par le fait que le réseau de balayage (4) présente une période de division (TP2) qui est sensiblement mais pas exactement égale au double de la période de division (TP1) du réseau de mesure (5) et qui est supérieure à la longueur d'onde (λ) de la lumière.

2. Dispositif de mesure de longueur ou d'angle selon la revendication 1, caractérisé par le fait qu'une lentille (6) est placée à la suite du réseau (4) traversé en dernier, lentille dans le plan focal de laquelle sont formés plusieurs foyers (10, 11).

3. Dispositif de mesure de longueur ou d'angle selon la revendication 2, caractérisé par le fait que la lentille (6) est une lentille à gradient d'indice.

4. Dispositif de mesure de longueur ou d'angle selon la revendication 2, caractérisé par le fait qu'on produit un système de bandes d'interférence (9) avec les ondes sphériques provenant des foyers (10, 11).

5. Dispositif de mesure de longueur ou d'angle selon la revendication 4, caractérisé par le fait qu'un diaphragme (7) est disposé entre la lentille (6) et les bandes d'interférence (9).

6. Dispositif de mesure de longueur ou d'angle selon la revendication 4, caractérisé par le fait qu'un détecteur (8) structuré est disposé à la suite de la lentille (6) à des fins d'exploitation du système de bandes d'interférence (9).

7. Dispositif de mesure de longueur ou d'angle selon la revendication 1, caractérisé par le fait que la source lumineuse (2) et le détecteur (8) sont disposés dans un plan perpendiculaire à la direction de mesure.

8. Dispositif de mesure de longueur ou d'angle selon la revendication 7, caractérisé par le fait que la source lumineuse (2) et le détecteur (8) sont disposés symétriquement par rapport à la normale à la règle de mesure (5).

9. Dispositif de mesure de longueur ou d'angle selon la revendication 1, caractérisé par le fait que la source lumineuse (2) et le détecteur (8) sont disposés dans un plan qui est défini par une composante dans la direction de mesure et la normale au réseau de mesure (5).

10. Dispositif de mesure de longueur ou d'angle selon la revendication 9, caractérisé par le fait qu'une lame séparatrice (112) est disposée sur la marche des rayons entre la source lumineuse (2) et le détecteur (8).

11. Dispositif de mesure de longueur ou d'angle selon la revendication 2, caractérisé par le fait qu'au moins un guide d'ondes est disposé au niveau de chacun des foyers (10, 11), lequel guide d'ondes amène les faisceaux partiels à un coupleur 2 x 3 connu en optique intégrée.

12. Dispositif de mesure de longueur ou d'angle selon l'une quelconque des revendications précédentes, caractérisé par le fait qu'on utilise comme réseau de mesure et/ou comme réseau de balayage des réseaux de phase et/ou des réseaux d'amplitude.

13. Dispositif de mesure de longueur ou d'angle selon l'une quelconque des revendications précédentes, caractérisé par le fait qu'on utilise comme réseau de mesure et/ou comme réseau de balayage des réseaux dits croisés (43, 53).

14. Dispositif de mesure de longueur ou d'angle selon l'une quelconque des revendications précédentes, caractérisé par le fait qu'à l'aide des réseaux croisés (43, 53) on forme un dispositif de mesure pour deux dimensions.
